# FASCICULE DE BREVET EUROPEEN

(11) **EP 3 052 432 B1**
(45) Date de publication et mention de la délivrance du brevet: **07.11.2018**
(21) Numéro de dépôt: 14790216.7
(22) Date de dépôt: 02.10.2014
(51) Int. Cl.: C01B 3/00, C01B 6/15, C04B 35/14, C04B 35/524, C04B 41/00, C04B 41/51, C04B 41/88

(54) **MATÉRIAU COMPOSITE SOLIDE ALVÉOLAIRE COMPORTANT DES NANOPARTICULES MÉTALLIQUES, PROCÉDÉ DE PRÉPARATION ET UTILISATIONS POUR LE STOCKAGE RÉVERSIBLE DE L'HYDROGÈNE**
FESTES ALVEOLARES VERBUNDMATERIAL MIT NANOPARTIKELN, VERFAHREN ZUR HERSTELLUNG DAVON UND VERWENDUNGEN DAVON ZUR REVERSIBLEN SPEICHERUNG VON WASSERSTOFF
SOLID ALVEOLAR COMPOSITE MATERIAL COMPRISING METAL NANOPARTICULES, METHOD FOR THE PRODUCTION THEREOF, AND USES OF SAME FOR THE REVERSIBLE STORAGE OF HYDROGEN

(30) Priorité: 03.10.2013 FR 1359588
(43) Date de publication de la demande: 10.08.2016
(73) Titulaire: Centre National de la Recherche Scientifique, 75016 Paris (FR); Sorbonne Université, 75006 Paris (FR)
(72) Inventeur: BACKOV, Rénal, F-33200 Bordeaux-Cauderan (FR); GERVAIS, Christel, F-75013 Paris (FR); JANOT, Raphaël, F-80260 Villers-Bocage (FR); SANCHEZ, Clément, F-91440 Bure sur Yvette (FR); DEPARDIEU, Martin, F-45000 Orleans (FR)
(74) Mandataire: Novagraaf Technologies
(86) Numéro de dépôt international: PCT/FR2014/052492
(87) Numéro de publication internationale: WO 2015/049464

(56) Documents cités:
- WO-A1-03/070662
- WO-A1-2007/064942
- FR-A1- 2 937 964
- US-A1- 2008 132 408
- CAMPESI ET AL: "Hydrogen storage properties of Pd nanoparticle/carbon template composites", CARBON, ELSEVIER, OXFORD, GB, vol. 46, no. 2, 19 novembre 2007 (2007-11-19), pages 206-214, XP022482988, ISSN: 0008-6223, DOI: 10.1016/J.CARBON.2007.11.006
- DIEGO BALLESTERO ET AL: "Novel methodology for gold nanoparticles deposition on carbon monolith supports", COLLOIDS AND SURFACES A: PHYSICOCHEMICAL AND ENGINEERING ASPECTS, vol. 441, 4 septembre 2013 (2013-09-04), pages 91-100, XP055118610, ISSN: 0927-7757, DOI: 10.1016/j.colsurfa.2013.08.055
- NICOLAS BRUN ET AL: "Hard-Templating Approach Using Silica Si(HIPE) Foams to Generate Micro-Macroporous Carbonaceous Monoliths", MATERIALS RESEARCH SOCIETY SYMPOSIUM PROCEEDINGS, MATERIALS RESEARCH SOCIETY, PITTSBURG, PA; US, vol. 1114, 1 janvier 2009 (2009-01-01), pages 1-6, XP002569343, ISSN: 0272-9172
- LUDOVIC DUMÉE ET AL: "Activation of gold decorated carbon nanotube hybrids for targeted gas adsorption and enhanced catalytic oxidation", JOURNAL OF MATERIALS CHEMISTRY, vol. 22, no. 18, 14 mai 2012 (2012-05-14), page 9374, XP055118518, ISSN: 0959-9428, DOI: 10.1039/c2jm16458b

## Description

La présente invention est relative à un matériau composite monolithique macroporeux, en particulier à un monolithe de carbone à structure poreuse hiérarchisée comportant des nanoparticules métalliques, ainsi qu'à son procédé de préparation, à un procédé de stockage de l'hydrogène le mettant en oeuvre, à un procédé de production d'hydrogène gazeux mettant en oeuvre un tel matériau composite, ledit procédé étant réversible.

Les matériaux se présentant sous la forme de monolithes de carbone poreux constituent des matériaux de choix pour de nombreuses applications telles que la purification de l'eau et de l'air, l'adsorption, la catalyse en phase hétérogène, la fabrication d'électrodes et le stockage de l'énergie en raison de leur grande surface spécifique, de leur grand volume de pores, de leur insensibilité aux réactions chimiques environnantes et de leurs excellentes propriétés mécaniques.

Ces matériaux comprennent une surface spécifique élevée et une structure hiérarchisée, c'est-à-dire une structure alvéolaire présentant généralement une double porosité. Ils présentent notamment une structure mésoporeuse dans laquelle le diamètre moyen des pores varie de l'ordre de 2 à 10 nm.

Le stockage et la production du dihydrogène représentent un enjeu majeur actuel en raison de l'évolution des technologies et de l'épuisement des ressources pétrolières. L'engouement pour les technologies portables engendre une demande croissante pour des systèmes permettant le stockage et la production de dihydrogène de façon simple et industrialisable.

Durant les dix dernières années, de nombreux travaux de recherche ont été menés pour élaborer des technologies destinées à permettre le stockage du dihydrogène dans des conditions satisfaisantes tant du point de vue de la sécurité que de l'utilisation. Parmi de telles technologies, on peut notamment citer les matériaux pour les réservoirs de stockage à haute pression, les procédés de liquéfaction du dihydrogène, les matériaux d'adsorption du dihydrogène et les hydrures métalliques, qui sont adaptées à une large variété d'applications aussi bien stationnaires que portables.

En particulier, le stockage de l'hydrogène à l'état solide sous forme d'hydrures métallique fait l'objet de nombreuses recherches car ils autorisent la production d'hydrogène pur. Les hydrures métalliques, notamment les borohydrures, ont de plus une excellente capacité (massique et surtout volumique) en termes de stockage de l'hydrogène à des pressions relativement faibles. Parmi ces composés, le borohydrure de lithium (LiBH₄) présente un intérêt particulier en raison de la teneur élevée en hydrogène (18,4 % massique) et sa bonne capacité volumique (121 kg.m⁻³ de H₂). La réaction simplifiée de décomposition du LiBH₄ est la suivante :

LiBH₄ → LiH + B + 3/2 H₂

La libération complète de l'hydrogène contenu dans LiBH₄ est cependant difficile à obtenir dans la mesure où la décomposition thermique du LiH formé à titre de produit intermédiaire pendant la réaction, intervient à des températures généralement supérieures à 600°C et sous vide, ce qui limite la quantité de dihydrogène libéré à seulement 13,8 % en masse.

Différents essais ont déjà été conduits dans le but d'améliorer la cinétique de cette réaction afin d'augmenter la quantité de dihydrogène pouvant être libérée.

Il a en particulier été proposé de confiner un hydrure métallique sous forme solide dans la porosité d'un monolithe de carbone ou de céramique macro/microporeux comme décrit par exemple dans la demande de brevet FR-A1-2 937 964, ou bien, et plus récemment, dans des mousses macrocellulaires (Wang Z. et al., Chem. Mater., 2008, 20, 1029). Cependant, même si l'utilisation de monolithes de carbone a permis, en jouant sur la taille du réseau microporeux, d'améliorer la cinétique de libération de l'hydrogène, il n'en demeure pas moins très difficile de procéder à la réhydrogénation des monolithes utilisés en raison de la grande inertie chimique du bore, ce qui ne permet pas d'utiliser ces monolithes de carbone dans un procédé de stockage réversible de l'hydrogène. En effet, il est très difficile de surmonter l'inertie chimique du bore et seule l'utilisation de conditions contraignantes (températures supérieures à 600°C, pression d'hydrogène de 350 bars) a pour le moment été rapportée dans la littérature (Gutowska A. et al., Angew Chem. Int. Ed., 2005, 446-447, 301). Il n'existe pas non plus à ce jour d'espèce catalytique clairement identifiée qui pourrait favoriser l'hydrogénation du mélange LiH + B ou d'alliages de type Li-B pour conduire, dans ces conditions acceptables de température et de pression à du LiBH₄.

Le but de la présente invention est de fournir un matériau à partir duquel il soit possible de produire du dihydrogène de façon simple et réversible à des températures inférieures à celles qui sont habituellement nécessaires pour obtenir une désorption de l'hydrogène sous forme de dihydrogène à partir d'un borohydrure métallique et qu'il soit de plus possible de réhydrogéner dans des conditions acceptables de température et de pression.

Ce but est atteint par le matériau composite et les procédés de stockage et de production réversible de l'hydrogène qui font l'objet de la présente invention et qui vont être décrits ci-après.

Les inventeurs ont en effet mis au point un matériau se présentant sous la forme d'un monolithe de carbone à structure poreuse hiérarchisée M2 (Macroporeux/Microporeux) comportant des nanoparticules d'un métal convenablement sélectionné et pouvant être utilisé de façon avantageuse pour le stockage de l'hydrogène par nucléation hétérogène d'un hydrure métallique dans la porosité dudit monolithe, ainsi que pour produire du dihydrogène par désorption de l'hydrogène contenu dans le matériau composite issu du procédé de stockage de l'hydrogène, ledit matériau pouvant ensuite être réhydrogéné.

La présente invention a donc pour premier objet un matériau composite solide alvéolaire se présentant sous la forme d'un monolithe de carbone poreux comportant un réseau poreux hiérarchisé comprenant des macropores ayant une dimension moyenne d_{A} de 1 µm à 100 µm environ, de préférence de 4 à 70 µm environ, et des micropores ayant une dimension moyenne d_{I} de 0,7 à 1,5 nm, lesdits macropores et micropores étant interconnectés, ledit matériau étant exempt de réseau mésoporeux et étant caractérisé en ce qu'il comporte des nanoparticules d'un métal M au degré d'oxydation zéro, ledit métal M étant choisi parmi le palladium et l'or.

Selon l'invention, les nanoparticules de palladium ou d'or sont présentes à la surface et dans le réseau poreaux du monolithe. De façon plus précise, les nanoparticules de palladium ou d'or sont présentes à la surface des macropores du monolithe.

Selon l'invention, la taille des nanoparticules de métal M peut varier de 1 à 300 nm environ. Selon une forme de réalisation préférée de l'invention, la taille des nanoparticules de métal M varie 2 à 100 nm environ et plus particulièrement de 2 à 20 nm environ.

Au sens de la présente invention, on entend par monolithe, un objet solide ayant une dimension moyenne d'au moins 1 mm.

Egalement au sens de la présente invention, on entend par réseau mésoporeux, un réseau comportant des mésopores, c'est-à-dire des pores dont la taille varie de 2 à 50 nm.

Dans ce matériau, les parois des macropores ont généralement une épaisseur de 1 à 10 nm, et de préférence de 1 à 20 nm.

Selon l'invention, les micropores sont présents dans l'épaisseur des parois des macropores, les rendant alors microporeuses.

La surface spécifique du matériau conforme à l'invention est généralement de 50 à 900 m²/g environ, préférentiellement de 100 à 700 m²/g environ.

Ainsi que cela est clairement démontré dans les exemples qui illustrent la présente invention, la présence de ces nanoparticules métalliques dans les monolithes de carbone permet d'améliorer fortement le procédé de réhydrogénation, permettant ainsi d'accéder à un procédé de stockage réversible de l'hydrogène à 400°C. Les inventeurs de la présente demande n'ont pas encore clairement identifié le mécanisme qui est à la base de cette amélioration, mais ils pensent qu'il ne s'agit pas d'une réaction de réhydrogénation catalysée dans la mesure où aucune réduction catalytique du bore par les métaux n'a encore été reportée dans la littérature.

Un autre objet de l'invention est un procédé de préparation d'un matériau composite tel que décrit ci-dessus, ledit procédé comportant les étapes suivantes :
i) une étape d'imprégnation d'un monolithe de carbone poreux comportant un réseau poreux hiérarchisé comprenant des macropores ayant une dimension moyenne d_{A} de 1 µm à 100 µm environ, de préférence de 4 à 70 µm environ, et des micropores ayant une dimension moyenne d_{I} de 0,7 à 1,5 nm, lesdits macropores et micropores étant interconnectés, ledit matériau étant exempt de réseau mésoporeux, par une solution d'un sel d'un métal M choisi parmi le palladium et l'or dans un solvant ;
ii) une étape de séchage à l'air dudit monolithe ;
iii) une étape de formation de nanoparticules dudit métal M au degré d'oxydation zéro par traitement thermique dudit monolithe à une température variant de 50 à 900°C, en présence d'un gaz réducteur, afin de provoquer la réduction des ions métalliques M jusqu'au degré d'oxydation zéro.

Les étapes i) à iii) peuvent bien entendu être éventuellement réitérées une ou plusieurs fois en fonction de la quantité finale de nanoparticules métalliques que l'on souhaite incorporer dans le monolithe de carbone et de la concentration de la solution de sel métallique utilisée pour réaliser l'imprégnation.

Les monolithes de carbone utilisables à l'étape i) du procédé conforme à l'invention (monolithes « nus ») sont des matériaux connus en tant que tels et dont le procédé de préparation est décrit par exemple dans la demande de brevet FR-A1-2 937 970.

La nature des sels du métal M n'est pas critique. A titre d'exemple non limitatif, les sels d'un métal M utilisables selon le procédé conforme à l'invention peuvent notamment être choisis parmi les chlorures, les sulfates, les nitrates, les phosphates, etc... Parmi de tels sels, on peut notamment mentionner le chlorure de palladium, le tétrachloroaurate de potassium (K₂AuCl₄) et l'hydrogénotétrachloroaurate (HAuCl₄).

La nature du solvant de la solution de sel du métal M n'est pas critique à partir du moment où il permet de solubiliser ledit métal M. A titre d'exemple non limitatif, le solvant de la solution de sel du métal M est un solvant polaire choisi parmi l'eau, les alcools inférieurs tels que le méthanol et l'éthanol, l'acétone, etc ..., et leurs mélanges.

La concentration en sel de métal M au sein de la solution d'imprégnation varie de préférence de 10⁻³ M à 1 M et encore plus préférentiellement de 10⁻² à 10⁻¹ M.

L'étape ii) de séchage du monolithe est de préférence réalisée à une température de 20 à 80°C, et plus préférentiellement à température ambiante.

La nature du gaz réducteur utilisé lors de l'étape iii) de formation des nanoparticules de métal M n'est pas critique dans la mesure où il permet de réduire ledit métal M jusqu'au degré d'oxydation zéro. A titre d'exemple non limitatif, le gaz réducteur peut notamment être choisi parmi l'hydrogène, l'argon, etc..., et leurs mélanges ; l'hydrogène étant particulièrement préféré.

Selon une forme de réalisation préférée de l'invention, l'étape iii) de traitement thermique est réalisée à une température de 80 à 400°C environ.

Selon une forme de réalisation particulièrement préférée de l'invention, le traitement thermique de l'étape iii) est réalisé en présence d'hydrogène à une température de 400 °C environ pendant 1 heure.

Le matériau composite conforme à l'invention et ainsi préparé peut ensuite être utilisé pour le stockage de l'hydrogène.

L'invention a donc également pour objet un procédé de stockage de l'hydrogène, dans un matériau composite comportant des nanoparticules d'un métal M choisi parmi le palladium et l'or au degré d'oxydation zéro conforme à l'invention et tel que décrit ci-dessus, ledit procédé étant caractérisé en qu'il comporte au moins les étapes suivantes :
a) une étape de dégazage dudit matériau sous vide secondaire et à une température de 150 à 400°C environ ;
b) une étape d'imprégnation, à température ambiante, dudit matériau dégazé par une solution d'au moins un hydrure métallique de formule (I) X(BH₄)ₙ avec X = Li, Na, Mg ou K, et n = 1 lorsque X = Li, Na ou K et n = 2 lorsque X = Mg, en solution dans un solvant organique choisi parmi les éthers ;
c) une étape de séchage du matériau imprégné par la solution d'hydrure métallique, ledit séchage étant réalisé sous vide primaire et à température ambiante ; et éventuellement
d) la réitération, une ou plusieurs fois, des étapes b) et c) ci-dessus.

Selon une forme de réalisation préférée de ce procédé, le dégazage du matériau lors de l'étape a) est effectué à une température de 280 à 320°C environ et encore plus préférentiellement à une température de 300°C environ.

La durée de l'étape a) peut varier de 2 à 24 heures environ, elle est de préférence de 12 heures environ.

La formule (I) des hydrures métalliques utilisables selon l'invention englobe bien entendu le borohydrure de lithium (Li(BH₄)), le borohydrure de sodium (Na(BH₄)), tetrahydroborure de magnésium (Mg(BH₄)₂) et le borohydrure de potassium (K(BH₄)). Parmi ces hydrures de formule (I), on préfère tout particulièrement le borohydrure de lithium.

Les solvants éthers utilisables lors de l'étape b) peuvent être choisis parmi les éthers aliphatiques et les éthers cycliques. Parmi les éthers aliphatiques, on peut notamment citer les éthers d'alkyles tels que le méthyl-*terti*obutyléther (MTBE) ou le diéthyléther. Parmi les éthers cycliques, on peut notamment citer le tétrahydrofurane. Selon une forme de réalisation préférée du procédé conforme à l'invention, le solvant de la solution d'hydrure métallique est le MTBE.

La concentration de la solution d'hydrure métallique de formule (I) utilisée lors de l'étape b) varie de préférence de 0,05 à 5 M, et encore plus préférentiellement de 0,1 à 0,5 M environ.

Un autre objet de l'invention est le matériau composite issu du procédé de stockage de l'hydrogène conforme à l'invention et tel que décrit précédemment.

Ce matériau composite se présente sous la forme d'un monolithe de carbone poreux comportant un réseau poreux hiérarchisé comprenant des macropores ayant une dimension moyenne d_{A} de 1 µm à 100 µm environ, de préférence de 4 à 70 µm environ, et des micropores ayant une dimension moyenne d_{I} de 0,7 à 1,5 nm, lesdits macropores et micropores étant interconnectés, ledit matériau étant exempt de réseau mésoporeux, ledit matériau composite étant caractérisé en ce qu'il comporte des nanoparticules d'un métal M au degré d'oxydation zéro, ledit métal M étant choisi parmi le palladium et l'or et en ce que les micropores renferment de l'hydrogène sous forme d'un hydrure métallique cristallin, semi-cristallin ou amorphe choisi parmi les hydrures de formule (I) X(BH₄)ₙ avec X = Li, Na, Mg ou K, et n = 1 lorsque X = Li, Na ou K et n = 2 lorsque X = Mg.

La surface spécifique du matériau composite conforme à l'invention est généralement de 50 à 900 m²/g environ, préférentiellement de 100 à 700 m²/g environ.

Selon une forme de réalisation préférée de l'invention, le volume des micropores est supérieur ou égal à 0,30 cm³.g⁻¹ de monolithe composite et l'hydrure métallique de formule (I) est dans ce cas sous forme amorphe.

La teneur en hydrogène présent sous forme d'hydrure métallique dans le matériau composite conforme à l'invention variera en fonction du volume microporeux et de la surface spécifique du monolithe utilisé lors de l'étape b) d'imprégnation et de la concentration en hydrure métallique de la solution utilisée pour l'imprégnation dudit monolithe. De manière générale, la teneur en hydrogène varie de 0,01 à 0,03 mole d'hydrogène environ par gramme de carbone monolithique. Cette quantité molaire correspond à une capacité massique de 1,8 à 5,4 % environ (masse d'hydrogène stockée par rapport à la masse totale du matériau composite).

L'invention a pour objet l'utilisation d'un matériau composite tel que défini précédemment pour la production de dihydrogène, notamment pour fournir du dihydrogène dans une pile à combustible fonctionnant au dihydrogène.

Enfin, l'invention a pour objet le procédé de production de dihydrogène mettant en oeuvre un matériau composite conforme à la présente invention. Il est caractérisé en ce que l'on soumet le matériau composite tel que défini ci-dessus à une étape de chauffage à une température d'au moins 100°C. De préférence, l'étape de chauffage est effectuée à une température de 250 à 400°C.

A une température d'au moins 100°C, on observe le dégagement de dihydrogène suite à la désorption de l'hydrogène de l'hydrure métallique de formule (I) contenu dans les micropores du matériau composite conforme à l'invention.

A l'issue de l'étape de chauffage nécessaire à la production de dihydrogène, le matériau composite conforme à l'invention présente la particularité de pouvoir être réhydrogéné. Dans ce cas, on soumet le matériau composite à une pression d'hydrogène de 50 à 200 bars à une température de 200 à 500°C pendant 1 à 48 heures.

Ainsi, l'invention a pour objet un procédé réversible de production de dihydrogène mettant en oeuvre un matériau composite renfermant un hydrure métallique de formule (I) conforme à la présente invention et tel que défini précédemment, ledit procédé étant caractérisé en ce qu'il comprend les étapes suivantes :
1) une étape de production de dihydrogène au cours de laquelle on soumet le matériau composite tel que défini ci-dessus à une étape de chauffage à une température d'au moins 100°C, puis
2) une étape de réhydrogénation au cours de laquelle on soumet ledit matériau composite à une pression d'hydrogène de 50 à 200 bars à une température de 200 à 500°C pendant 1 à 48 heures ;
3) la réitération des étapes 1) et 2) ci-dessus une ou plusieurs fois.

Selon une forme de réalisation préférée de ce procédé, l'étape 2) est réalisée en soumettant le matériau à une pression d'hydrogène de 100 bars à 400°C pendant 12 à 24 heures.

La présente invention est illustrée par les exemples de réalisation suivants, auxquels elle n'est cependant pas limitée.

### EXEMPLES

Les matières premières utilisées dans les exemples qui suivent sont listées ci-après :
- Bromure de cétyltriméthylammonium, pur à 98 % (CTAB) : société ChemPur ;
- Tetraéthoxyorthosilane pureté > à 99 % (TEOS) : société Sigma-Aldrich ;
- Chlorure de palladium (PdCl2) et tetrachloroaurate de potassium (KAuCL₄) : société Sigma-Aldrich
- Acétone, Dodécane, pureté > à 90 % : société Rectapur ;
- Tetrahydrofurane (THF) ;
- Acide chlorhydrique à 37 % ; acide fluorhydrique à 50 % : société Carlo Erba Reagents ;
- Résine formophénolique vendue sous forme d'une solution hydroalcoolique de prépolymères, sous la dénomination Ablaphene ® RS 101 par la société Rhodia ;
- Poudre de LiBH₄ commerciale vendue par la société Acros Organics ;
- Méthyl-*tertio*-butyléther (MTBE) pur à 99,8 % vendu par la société Sigma-Aldrich.

Ces matières premières ont été utilisées telles que reçues des fabricants, sans purification supplémentaire.

Les différents monolithes obtenus dans les exemples ont été caractérisés sur différentes échelles de tailles.

La macroporosité a été caractérisée de manière qualitative par une technique de microscopie électronique à balayage (MEB) à l'aide d'un microscope à balayage Hitachi TM-1000 qui fonctionne à 15 kV. Les échantillons ont été revêtus d'or et de palladium dans un évaporateur sous vide avant leur caractérisation.

La mésoporosité a été caractérisée de manière qualitative par une technique de microscopie électronique à transmission (MET) à l'aide d'un microscope Jeol 2000 FX ayant une tension d'accélération de 200 kV. Les échantillons ont été broyés sous forme de poudre qui a ensuite été disposée sur une grille en cuivre revêtue d'une membrane Formvar&Commat en carbone.

Les surfaces spécifiques et les caractéristiques des pores à l'échelle micro(méso)scopique ont été quantifiées par des mesures d'intrusion/extrusion de mercure, à l'aide d'un appareil commercialisé sous la dénomination Micromeritics Autopore IV, pour atteindre les caractéristiques des cellules macroscopiques composant le squelette.

Les mesures de surface spécifique ont été faites par des techniques d'adsorption-désorption d'azote à l'aide d'un appareil commercialisé sous la dénomination Micromeritics ASAP 2010 ; le dépouillement étant fait par les méthodes de calcul B.E.T ou B.J.H.

Les échantillons ont été soumis à une analyse par diffraction des rayons X (XRD) à l'aide d'un diffractomètre D8 Advance vendu par la société Bruker (anode Cu K_{α} radiation, λ = 1,54056 Ǻ) équipé d'un détecteur PSD. En raison de la grande réactivité de LiBH₄ à l'air et à l'humidité, un porte échantillon hermétique équipé d'une fenêtre en béryllium a été utilisé. Ce dispositif est responsable de la présence de réflections correspondant à Be métallique sur les diagrammes de diffraction des rayons X.

Des analyses calorimétriques ont été réalisées sous flux d'argon (100 cm³.min⁻¹) à l'aide d'un calorimètre différentiel à balayage commercialisé sous la référence DSC 204 par la société Netzsch, en utilisant des creusets en acier inoxydable scellés par un couvercle, ce dernier étant perforé juste avant l'analyse de façon à permettre à l'hydrogène de s'échapper sous l'influence du chauffage. Une vitesse de chauffage de 2°C/min a été utilisée dans toutes les expériences.

Des mesures de désorption programmée en température (« *Temperature-Programmed Desorption* » : TPD) couplées à de la spectrométrie de masse ont été réalisées sur du LiBH₄, ainsi que sur des monolithes chargés en LiBH₄ conformes à l'invention, à l'aide d'un spectrophotomètre de masse vendu sous la référence QXK300 par la société VG Scientif Ltd.). La procédure consiste à charger environ 5 mg de monolithe dans un tube en acier inoxydable (6 mm de diamètre). Le tube est ensuite connecté au spectrophotomètre de masse et dégazé sous vide primaire (10⁻² mbar). Les courbes TPD (m/z = 2 pour l'hydrogène) ont été acquises en appliquant une vitesse de montée en température de 10°C/min jusqu'à atteindre 600°C. La désorption de l'hydrogène a été suivie par des mesures volumétriques à l'aide d'un appareil de type Sieverts (R. Checchetto et al., Meas. Sci. Technol., 2004, 15, 127-130). Après dégazage à température ambiante, les propriétés d'absorption/désorption de l'hydrogène des échantillons testés ont été calculées par mesure volumétrique en utilisant la loi des gaz parfaits. La capacité de désorption de l'hydrogène des échantillons a été mesurée tous les 50°C entre 50°C et 500°C. Pour chaque température, la mesure de la capacité de désorption de l'hydrogène a été déterminée après une durée de désorption totale de 2 heures. Le volume calibré, dans lequel l'hydrogène a été collecté, a été régulièrement vidé de façon à maintenir une pression toujours inférieure à 1 bar. Les échantillons ont été réhydrogénés sous une pression de 100 bars d'hydrogène à 400°C pendant 12 heures. Les spectres RMN du ¹¹B ont été déterminés par rotation des échantillons à l'angle magique (Magic Angle Spinnig RMN : MAS RMN), à B₀ = 11,75 T, l'aide d'un spectrophotomètre RMN vendu sous la dénomination commerciale Bruker Avance 500 wide-bore, en opérant à 128,28 MHZ équipé d'une sonde Bruker de 4 mm et en réglant la vitesse de rotation du rotor à 14kHz. Les spectres ont été acquis en utilisant une séquence en écho de spin θ-τ-2θ avec θ = 90. Le délai τ a été synchronisé avec la fréquence de rotation et un délai de recyclage de 1s a été utilisé. Les déplacements chimiques ont été référencés par rapport au composé BF₃(OEt)₂ (δ = 0 ppm).

### Exemple 1

### Préparation de monolithes de carbone composite comportant de nanoparticules de palladium ou d'or

Dans cet exemple on illustre la préparation de différents monolithes de carbone comportant des nanoparticules de palladium ou d'or.

### 1) Première étape : Synthèse d'un monolithe de silice micro/méso/macroporeux (MSi).

5 g de TEOS ont été ajoutés à 16 g d'une solution aqueuse de TTAB à 35 % précédemment acidifiée par 6 g d'HCl. On a laissé l'hydrolyse se dérouler jusqu'à obtention d'un milieu hydrophile monophasique (phase aqueuse de l'émulsion). On a ensuite transféré cette phase aqueuse dans un mortier, puis on a ajouté 35 g de dodécane (phase huileuse de l'émulsion) au goutte à goutte et sous agitation. On a ensuite transféré cette émulsion dans des tubes à essai en polystyrène fermés puis laissé l'émulsion se condenser sous forme d'un monolithe de silice pendant une semaine à température ambiante. Les monolithes de silice ainsi synthétisés ont ensuite été lavés trois fois pendant 24 heures par un mélange THF/acétone (50/50 : v/v) pour en extraire la phase huileuse. Les monolithe de silice ont alors été mis à sécher pendant une semaine à température ambiante puis ils ont été soumis à un traitement thermique à 650°C pendant 6 heures en appliquant une vitesse de montée en température de 2°C/min., avec un premier plateau à 200°C pendant 2 heures. On a obtenu des monolithes de silice que l'on a désigné MSi.

### 2) Deuxième étape : Imprégnation du monolithe de silice par la résine phénolique

On a préparé une solution de résine phénolique Ablaphene® RS 110 suivantes à 25 % en masse dans le THF que l'on dénomme Solution S25.

Les monolithes de silice MSi obtenus ci-dessus ont été immergés dans la Solution S25 dans un bêcher. Les béchers ont été placés sous vide dynamique jusqu'à disparition de l'effervescence afin de s'assurer d'une bonne imprégnation des matrices de silice par les solutions de résine phénolique, puis laissés sous vide statique pendant 3 jours.

Les monolithes de silice ainsi imprégnés de la Solution S25 (dénommés MSiS25) ont alors été lavés rapidement au THF puis séchés dans un four à une température de 80°C pendant 24 heures afin de faciliter l'évaporation du solvant et initier thermiquement la réticulation des monomères de la résine phénolique. Les monolithes MSiS25 ont ensuite subi un deuxième traitement thermique dans une étuve à air chaud, à 155°C pendant 5 heures, avec une vitesse d'élévation de la température de 2°C/min., en effectuant un premier plateau à 80°C pendant 12 heures puis un second plateau à 110°C pendant 3 heures. On a ensuite laissé les monolithes revenir à température ambiante par simple arrêt de l'étuve. Les monolithes ont ensuite été lavés à l'acide fluorhydrique à 10 % afin d'éliminer l'empreinte de silice, puis rincés abondamment à l'eau distillée pendant 24 heures.

Les monolithes de carbone graphitisés ainsi obtenus a été désigné MS25carb.

### 3) Troisième étape : Imprégnation des monolithes de carbone par un sel de palladium ou un sel d'or et formation des nanoparticules par nucléation hétérogène

### 3.1 Préparation des monolithes composites comportant des nanoparticules de palladium

Des monolithes MS25carb obtenus ci-dessus à l'étape précédente ont été immergés dans un bécher contenant une solution de chlorure de palladium à 4,5.10⁻²M dans un mélange acétone/eau (1 :1 ; v :v) acidifiée par 0,5 mL d'acide chlorhydrique. Le bécher ensuite été placé sous vide dynamique jusqu'à disparition de l'effervescence de façon à s'assurer de la bonne imprégnation de la solution de chlorure de palladium dans la porosité des monolithes, puis laissés sous vide statique pendant 3 jours. Les monolithes ont ensuite été séchés à l'air, puis le chlorure de palladium a été réduit par traitement thermique des monolithes à 400°C (vitesse de montée en température 2°C/min) sous hydrogène. Les monolithes composites ainsi obtenus ont été dénommés PdMS25carb.

### 3.2 Préparation des monolithes composites comportant des nanoparticules d'or

Des monolithes MS25carb obtenus ci-dessus à l'étape précédente ont été immergés dans un bécher contenant une solution de tetrachloroaurate de potassium à 4,5.10⁻²M dans un mélange acétone/eau (1 :1 ; v :v). Le bécher a ensuite été placé sous vide dynamique jusqu'à disparition de l'effervescence de façon à s'assurer de la bonne imprégnation de la solution de tetrachloroaurate de potassium dans la porosité des monolithes, puis laissés sous vide statique pendant 3 jours. Les monolithes ont ensuite été séchés à l'air, puis les ions Au³⁺ du tetrachloroaurate de potassium ont été réduits par traitement thermique des monolithes à 80°C sous une pression d'hydrogène de 8 bars. Les monolithes composites ainsi obtenus ont été dénommés AuMS25carb.

### 4) Caractérisations

La figure 1 annexée montre une vue macroscopique d'un monolithe MS25carb obtenu à l'issue de la deuxième étape du procédé.
La figure 2 annexée montre une vue microscopique au MEB du réseau poreaux macroscopique du monolithe de carbone MS25carb de la figure 1. Sur cette figure, on observe que le monolithe comporte une macroporosité ouverte dont la texture ressemble à un agrégat de sphères creuses.

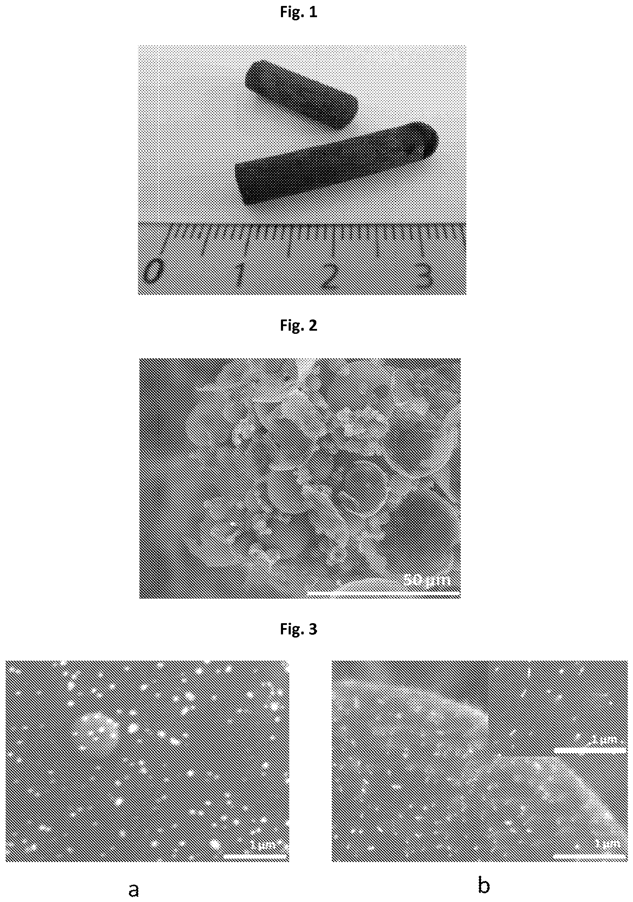

Après imprégnation des monolithes par les sels de palladium ou d'or et réduction, la répartition des nanoparticules de palladium ou d'or a été observée à l'échelle macroscopique au MEB au moyen d'un détecteur d'électrons rétro-diffusés (voir figure 3 annexée). La figure 3a correspond au monolithe PdMS25carb et la figure 3b au monolithe AuMS25carb. On constate que la répartition des nanoparticules métallique est assez homogène depuis l'extérieur vers l'intérieur du monolithe avec quelques agrégats

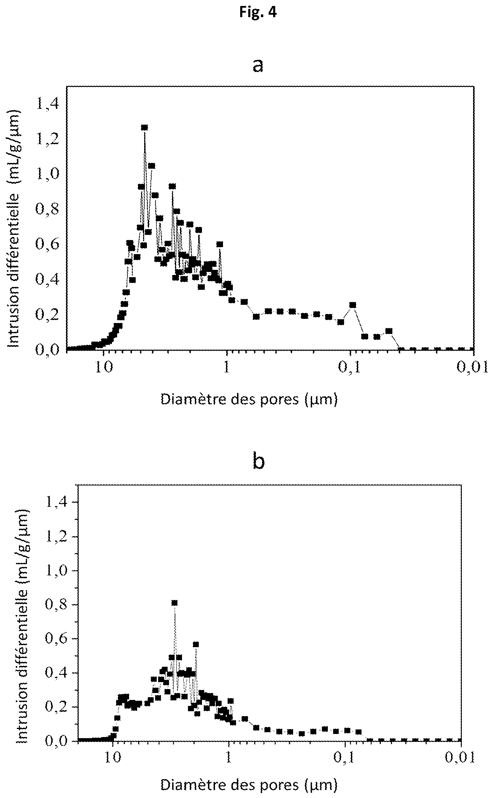

Les résultats des mesures d'intrusion au mercure effectuées sur les monolithes PdMS25carb et AuMS25carb synthétisés dans cet exemple sont reportés sur la figure 4 annexée. Sur ces figures, le volume d'intrusion (en ml/g/µm) est fonction du diamètre des pores (en µm), la figure 4a correspondant au monolithe PdMS25carb et la figure 4b au monolithe AuMS25carb. Il est important de souligner ici que les mesures d'intrusion au mercure ne permettent de déterminer que le diamètre des fenêtres qui connectent deux sphères creuses adjacentes et non celui des sphères creuses elles-mêmes. On observe que le diamètre de ces fenêtres est polydisperse et présente une distribution bimodale. Ces caractéristiques résultent de l'agrégation de sphères creuses et dénotent de la coexistence de jonctions cellulaires internes et externes, les valeurs supérieures à 1 µm correspondant aux jonctions externes et les valeurs inférieures à 100 nm correspondant aux jonctions internes. Les mesures d'intrusion au mercure ont également permis de déterminer le pourcentage de porosité des monolithes, ainsi que la densité globale et la densité du squelette du monolithe. Les résultats correspondant sont regroupés dans le tableau 1 ci-après :

**Tableau 1**

| **Monolithes** | **PdMS25carb** | **AuMS25carb** |
|---|---|---|
| Volume d'intrusion (cm³.g⁻¹) | 4,51 | 2,43 |
| Porosité (%) | 78 | 68 |
| Densité globale (g.cm³) | 0,17 | 0,28 |
| Densité du squelette (g.cm³) | 0,81 | 0,87 |

Concernant l'échelle mésoscopique, les surfaces spécifiques calculées à partir des mesures de physisorption à l'azote sont reportées dans le tableau 2 ci-après :

**Tableau 2**

| | **BET (m².g⁻¹)** | **BJH (m².g⁻¹)** | | ***t*-Plot (m².g⁻¹)** | |
|---|---|---|---|---|---|
| | | **Adsorption** | **Désorption** | **Ext** | **Meso/Micro** |
| **PdMS25carb** | 606 | 37 | 88 | 33 | 573 |
| **AuMS25carb** | 122 | 7 | | | 118 |

Il apparait que la surface spécifique du monolithe comportant des nanoparticules d'or est inférieure à celle du monolithe comportant des nanoparticules de palladium. En référence à la figure 2, il s'avère que les nanoparticules d'or sont plus petites que les nanoparticules de palladium et de ce fait réparties de façon plus homogène à la surface des macropores. Ceci a pour effet de minimiser la diffusion de l'azote au travers de la porosité. Il est également important de rappeler que la porosité est exprimée en m².g-¹, c'est-à-dire que pour une même porosité intrinsèque, le monolithe comportant le plus de nanoparticules métalliques présentera intrinsèquement une surface spécifique inférieure. Par ailleurs, conformément aux valeurs BJH, il est à noter que les monolithes ainsi préparés ne comportent pas de réseau mésoporeux.

Les analyses élémentaires des monolithes PdMS25carb et AuMS25carb indiquent qu'ils contiennent respectivement 8,15 % de palladium et 10,07 % d'or.

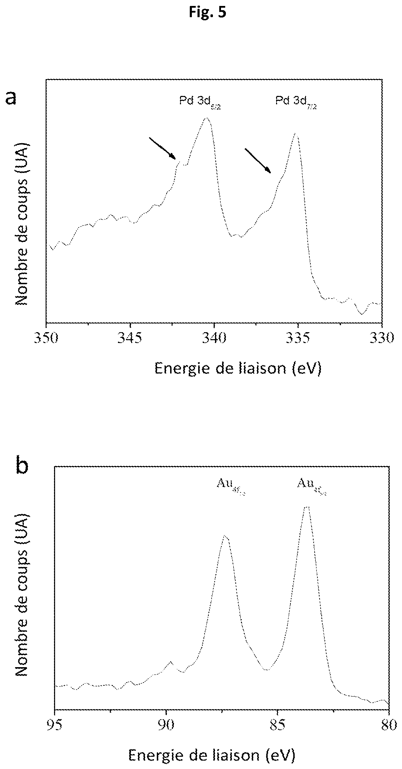

Les spectres XPS des monolithes PdMS25carb et AuMS25carb sont donnés sur la figure 5 annexée sur lesquelles l'énergie de liaison (en eV) est fonction du nombre de coups (en Unités Arbitraires : UA) ; la figure 5a correspondant au monolithe PdMS25carb axée sur l'énergie de liaison du palladium métallique et la figure 5b au monolithe AuMS25carb axée sur l'énergie de liaison de l'or métallique. Le spectre de la figure 5a montre les pic du Pd 3d_{5/2} à 340,3 eV et du Pd 3d_{7/2} à 335,5 eV correspondant au palladium métallique, c'est-à-dire au palladium au degré d'oxydation zéro. On peut également observer un léger épaulement indiqué par les flèches sur chacun des pics à une valeur d'énergie de liaison un peu plus élevée, ledit épaulement étant attribué à la présence d'une petite quantité d'oxyde de palladium PdO, cette quantité étant cependant trop faible pour affecter les performances du monolithe vis-à-vis du stockage ultérieur de l'hydrogène.

Sur la figure 5b on observe les pics de l'or métallique 4F_{7/2} et 4F_{5/2} à respectivement 83,6 eV et 87,5 eV, ces pics étant significatifs d'une réduction totale de l'or présent dans le monolithe à l'état d'oxydation zéro.

### Exemple 2

### Stockage et relargage de l'hydrogène dans les monolithes conformes à l'invention

Les monolithes de carbone PdMS25carb et AuMS25carb préparés ci-dessus à l'exemple 1 ont été utilisés pour stocker de l'hydrogène, par nucléation hétérogène de LiBH₄ au sein des micropores. Le relargage de l'hydrogène à partir des monolithes de carbone a également été étudié.

### 1) Stockage de l'hydrogène par nucléation hétérogène de LiBH₄

Toutes les expériences de nucléation hétérogène du LiBH₄ dans les monolithes de carbone PdMS25carb et AuMS25carb ont été réalisées en boite à gants sous atmosphère d'argon purifié. On a d'abord préparé une solution à 0,1 M de LiBH₄ par dissolution de 217 mg de poudre de LiBH₄ dans 100 ml de MTBE à température ambiante et sous agitation. Les monolithes de carbone ont été dégazés à 300°C sous vide secondaire (P < 10⁻⁴ mbar) pendant 12 heures avant d'être imprégnés par la solution de LiBH₄. L'imprégnation a été réalisée en plaçant 100 mg de chacun des monolithes de carbone dans la solution à 0,1 M de LiBH₄. Après imprégnation, les monolithes de carbone ont été extraits de la solution de LiBH₄ par filtration et séchés sous vide primaire à température ambiante. Trois cycles d'imprégnation/séchage ont ainsi été réalisés afin d'optimiser la quantité de LiBH₄ contenu dans les monolithes.

On a ainsi obtenu des monolithes de carbone chargés 20 % en masse en LiBH₄ solide que l'on a respectivement dénommé PdMS25carb/LiBH₄ et AuMS25carb/LiBH₄.

La quantité de LiBH₄ chargée dans les monolithes a été déterminée par mesure de la teneur en Li par spectroscopie d'absorption atomique (SAA) sur un spectromètre vendu sous la dénomination commerciale AAnalyst 300 par la société PerkinElmer, après dissolution des monolithes chargés en LiBH₄ dans une solution d'acide chlorhydrique 1,0 M. Typiquement, 50 mg de monolithe chargés en LiBH₄ sont introduits dans une fiole contenant 250 cm³ de la solution de HCl 0,1 M, puis la fiole est placée dans une cuve à ultrasons pour une durée de 30 minutes. La solution obtenue est dosée par spectrométrie d'absorption atomique. Des solutions standards à 1, 2 et 3 mg.L⁻¹ de Li ont été préalablement utilisées pour étalonner le spectromètre.

Toutes les teneurs en hydrogène données dans cet exemple sont exprimées en pourcentage massique rapportée à la masse totale de l'échantillon (LiBH₄ + monolithe de carbone).

### 2) Résultats relatifs à la désorption du dihydrogène

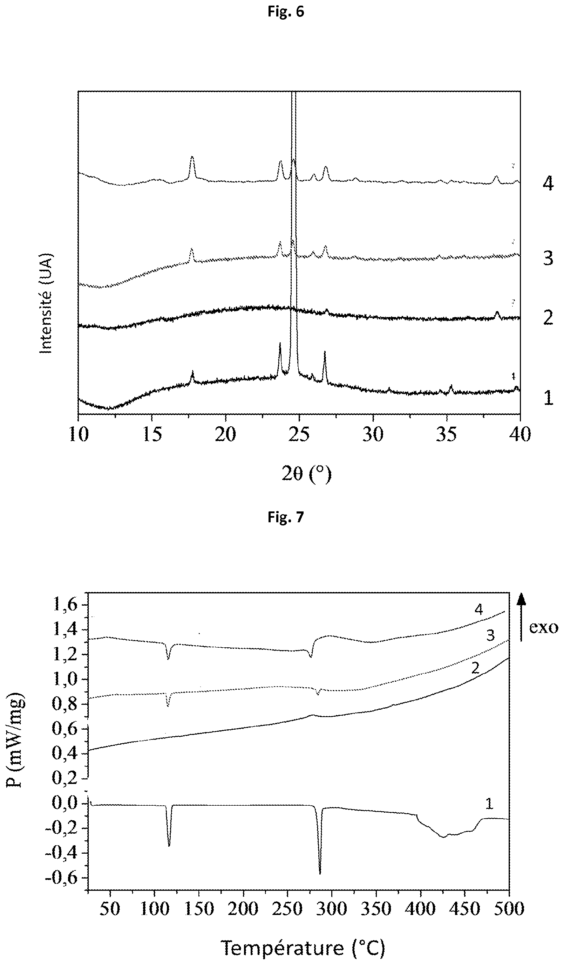

La figure 6 annexée représente les diagrammes de diffraction des rayons X des monolithes PdMS25carb/LiBH₄ et AuMS25carb/LiBH₄ (respectivement courbes 4 et 3), ainsi que d'un monolithe de carbone non modifié par des nanoparticules métalliques (MS25carb/LiBH₄ ; courbe 2) et du LiBH₄ commercial seul (courbe 1).

On observe pour le LiBH₄ seul, des pics de diffraction bien définis correspondant à la maille orthorhombique basse température de LiBH₄ (groupe d'espace Pnma) : les réflexions très pointues révèlent des cristallites de grande taille et la réflexion 002 à 2θ_{Cu} = 24,6° est anormalement intense, probablement en raison d'une orientation préférentielle. On observe également une perte importante du caractère cristallin du LiBH₄ après sa nucléation hétérogène sur les parois des macropores (courbe 2), la présence des micropores à la surface des macropores optimisant le phénomène de nucléation hétérogène tout en minimisant la croissance du LiBH4 ainsi que son caractère cristallin. Par contre, les pics de diffraction du LiBH₄ sont bien présents sur les courbes 3 et 4 correspondant respectivement aux monolithes AuMS25carb/LiBH₄ et PdMS25carb/LiBH₄. Ceci signifie que les nanoparticules métalliques présentes dans ces monolithes favorisent la cristallisation du LiBH₄ et atténue l'influence négative des micropores présents à la surface des macropores. Cela vient probablement du fait que les parois carbonées et les nanoparticles métalliques présentent des énergies de surface différentes et par voie de conséquence une mouillabilité inférieure à celles des nanoparticules métalliques vis-à-vis de la solution de LiBH₄ utilisée pour imprégner les monolithes. La nucléation hétérogène du LiBH₄ à la surface des nanoparticules métalliques est ainsi favorisée et comme il y a moins de nanoparticules présentes à la surface des macropores que des micropores, la nucléation du LiBH₄ va être minimisée alors que la croissance cristalline va être elle au contraire augmentée et optimisée de façon à consommer la totalité du précurseur de LiBH₄ présent dans la solution d'imprégnation.

La perte de cristallinité de LiBH₄ dans le monolithe MS25carb/LiBH₄ a été confirmée par DSC. Les résultats correspondants à la décomposition thermique des échantillons testés sont présentés sur la figure 7 annexée sur laquelle le flux de chaleur (en mW/mg) est fonction de la température (en °C). Sur cette figure, la courbe 1 correspond au LiBH₄ seul, la courbe 2 au monolithe de carbone chargé en LiBH₄ (MS25carb/LiBH₄), la courbe 3 au monolithe AuMS25carb/LiBH₄ et la courbe 4 au monolithe PdMS25carb/LiBH₄.

Pour le LiBH₄ seul, on observe deux pics endothermiques pointus à 116°C et 286°C et un affaissement assez large entre 400 et 450°C. Le premier pic endothermique à 116°C indique que LiBH₄ subit une transition de phase pour passer de la maille orthorhombique basse température (Pnma) à une phase haute température (P6₃mc) (Soulié, J.-P ; et al., J. All. Comp., 2002, 346, 200). Le second pic endothermique situé à 286°C correspond à la fusion de LiBH₄. Selon la littérature, il est connu que la désorption de l'hydrogène à partir de LiBH₄ sous forme de poudre, c'est-à-dire non contenu dans un monolithe de carbone tel qu'utilisé selon la présente invention, se déroule en 2 étapes à une température supérieure au point de fusion (*via* la formation d'un produit de décomposition intermédiaire : Li₂B₁₂H₁₂ pouvant être contaminé par le relargage d'espèces volatiles telle que le diborane (B₂H₆) ; Orimo, S. et al., Appl. Phys. Let., 2006, 89, 219201). A 500°C, les produits de décomposition du LiBH₄ sont du LiH et du bore.

Avec le monolithe MS25carb/LiBH₄, la forme de la courbe est modifiée de façon drastique puisque qu'on n'observe aucun pic de transition de phase. Ceci est en accord avec l'absence de réflexion observée sur le diagramme de diffraction des rayons X présenté sur la figure 6. Dans la mesure où la présence de BH₄ a été confirmée par RMN du ¹¹B, on peut en conclure que le LiBH₄ est présent sous la forme d'une phase amorphe. De façon très surprenante, on n'observe aucun pic endothermique de relargage du dihydrogène. A l'inverse, on observe un petit pic exothermique pouvant s'expliquer par la présence de groupes résiduels oxygénés dans la microporosité du monolithes engendrant des réactions irréversibles et exothermiques conduisant à la formation de borates (présence de pics entre 5 et 200 ppm en RMN du ¹¹B pouvant être attribués à du BO₄ et/ou du BO₃). En effet, même si les monolithes de carbone on été dégazés sous vide secondaire à 300°C pendant 12 heures avant les étapes d'imprégnation, il est très difficile de s'assurer que la porosité des monolithes et totalement exemptes de groupes chimiques résiduels pouvant créer des réactions parasites lors du relargage du dihydrogène à partir de LiBH₄.

Par contre, dans le cas des monolithes comportant des nanoparticules métalliques, à savoir les monolithes AuMS25carb/LiBH₄ et PdMS25carb/LiBH₄ conformes à l'invention, on n'observe pas de modification de l'allure des courbes par rapport au LiBH₄ seul, les pics caractéristiques de la transition de phase du LiBH₄ et de sa fusion étant en effet observés aux mêmes températures. Le relargage du dihydrogène apparait comme étant légèrement endothermique, suggérant l'absence de réaction d'oxydation pendant le processus.

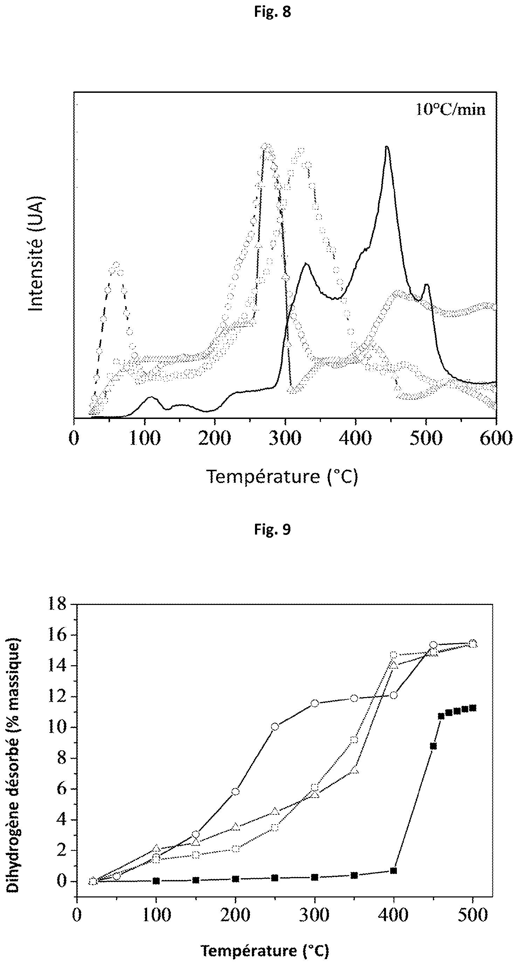

Les propriétés de désorption de l'hydrogène des différents échantillons testés sont présentées sur la figure 8 annexée qui représente les courbes d'émission de dihydrogène mesurée par thermodésorption couplée au spectromètre de masse sur les différents échantillons. Sur cette figure l'intensité du pic m/z = 2 (en UA) est fonction de la température (en °C), la courbe au tracé continu sans symbole correspond à l'émission de dihydrogène mesurée sur LiBH₄ seul, la courbe au tracé interrompu par des cercles vides correspond à l'émission de dihydrogène mesurée sur le monolithe MS25carb/LiBH₄ non conforme à l'invention, la courbe au tracé interrompu par des carrés vides correspond à l'émission de dihydrogène mesurée sur le monolithe AuMS25carb/LiBH₄ conforme à l'invention et la courbe au tracé interrompu par des triangles vides correspond à l'émission de dihydrogène mesurée sur le monolithe PdMS25carb/LiBH₄ conforme à l'invention.

On constate qu'avec LiBH₄ seul, la désorption du dihydrogène intervient à une température supérieure à 300°C en plusieurs étapes, le pic principal de désorption étant centré à 445°C. Lorsque LiBH₄ est nucléé dans un monolithe de carbone non conforme à l'invention, c'est dire ne comportant pas de nanoparticules métalliques (monolithe MS25carb/LiBH₄), on observe un seul pic pointu de désorption du dihydrogène centré à 275°C, une température qui est plus basse d'environ 170°C que celle nécessaire à la désorption du dihydrogène à partir du LiBH₄ seul. En plus de ce pic principal à 276°C, on observe un pic secondaire à 60°C. La présence de ce pic supplémentaire peut être attribué à la décomposition thermique de phases LiBH₄₋ₓ(OH)ₓ, issues de la réaction de LiBH₄ avec l'humidité (Hwang, S-J. et al., J. Phys. Chem. C, 2008, 112, 3165) conduisant à la formation de dihydrogène et de borates à basses températures.

En comparaison, le pic de désorption du dihydrogène observé à 60°C avec les monolithes conformes à l'invention PdMS25carb/LiBH₄ et AuMS25carb/LiBH₄ sont moindres, suggérant une oxydation moins importante. En ce qui concerne le monolithe PdMS25carb/LiBH₄, le pic principal de désorption du dihydrogène est centré à 275°C et plus aigu que le pic correspondant observé pour le monolithe MS25carb/LiBH₄ ne comportant pas de nanoparticules métalliques. De plus, une désorption supplémentaire est observée à une température inférieure à 350°C, qui pourrait correspondre à la décomposition de LiH.

La figure 9 représente les courbes d'émission de dihydrogène obtenues par mesures volumétriques selon la méthode de Sievert pour chacun des échantillons testés. Sur cette figure, la quantité d'hydrogène désorbé (en % massique par rapport au LiBH₄) est fonction de la température (en C) ; la courbe avec les carrés pleins correspond à l'émission de dihydrogène mesurée à partir du LiBH₄ seul, celle avec les ronds vides correspond à l'émission de dihydrogène mesurée à partir du monolithe MS25carb/LiBH₄ ne comportant pas de nanoparticules métalliques, celle avec les carrés vides au monolithe AuMS25carb/LiBH₄ conforme à l'invention et celle avec les triangles vides au monolithe PdMS25carb/LiBH₄ conforme à l'invention. Les valeurs de % massique d'hydrogène désorbé données sur la figure 9 doivent être divisées par 5 pour avoir le % massique d'hydrogène désorbé par rapport à la masse totale des matériaux (incluant la masse de la matrice des monolithes de carbone et celle des nanoparticules métalliques le cas échéant).

Pour le LiBH₄ seul, la déshydrogénation intervient à 400°C et atteint 11,2 % massique à 500°C, ce qui correspond à 81 % de la capacité théorique si l'on se base sur la formation de LiH et de B (% massique théorique de déshydrogénation de 13,8%). Avec le monolithe MS25carb/LiBH₄ ne comportant pas de nanoparticules métalliques, la déshydrogénation commence à 100°C. A 300°C, 11,6 % massique du dihydrogène est désorbé alors que le % massique de dihydrogène désorbé pour le LiBH₄ seul est négligeable à cette même température, un 2^{ème} étant observé ensuite aux températures supérieures à 400°C pour atteindre un % massique final de désorption du dihydrogène de 16 % à 500°C, ce qui représente 3,4 atomes d'hydrogène par unité de formule LiBH₄. On observe le même comportement avec les monolithes PdMS25carb/LiBH₄ et AuMS25carb/LiBH₄ conformes à l'invention avec cependant des quantités de dihydrogène désorbé légèrement inférieure à celle observée avec le monolithe MS25carb/LiBH₄ à des températures inférieures à 350°C. A des températures supérieures à 350°C, les courbes se rejoignent pour atteindre un % massique final de relargage du dihydrogène de 15,6 % massique à 500°C.

### 3) Essais de réhydrogénation des monolithes

Les différents monolithes testés ci-dessus (PdMS25carb/LiBH₄ ; AuMS25carb/LiBH₄ et MS25carb/LiBH₄) et LiBH₄ seul ont ensuite été soumis à une pression de 100 bars de H₂ à 400°C pendant 12 heures en vue d'être réhydrogénés.

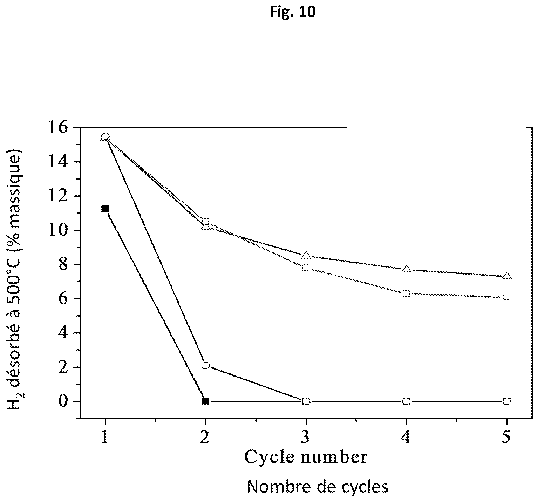

La figure 10 annexée montre la quantité d'hydrogène relargué à 500°C (en % massique) en fonction du nombre de cycles pendant les 5 premiers cycles de désorption/absorption. Sur cette figure, la courbe avec les carrés pleins correspond au LiBH₄ seul, celle avec les cercles vides au monolithes MS25carb/LiBH₄ non conforme à l'invention, celle avec les carrés vides au monolithe AuMS25carb/LiBH₄ conforme à l'invention et celle avec les triangles vides au monolithe PdMS25carb/LiBH₄ conforme à l'invention.

Ces résultats montrent que la réhydrogénation du LiBH4 est impossible dans la mesure où l'on n'observe aucun relargage de dihydrogène à partir du 2^{ème} cycle de désorption. Un effet positif du confinement du LiBH4 dans le monolithe MS25carb/LiBH₄ non conforme à l'invention est observé, pour lequel on observe une légère réhydrogénation du monolithe. Ceci est confirmé par le taux de relargage du dihydrogène (2,1 % massique par rapport à la masse de LiBH₄) au 2^{ème} cycle de désorption.

Par contre, avec les monolithes conformes à l'invention, c'est-à-dire comportant des inclusions de nanoparticules métalliques, on observe une augmentation très importante de la quantité de dihydrogène pouvant être réabsorbée. En effet, environ 10,4 % massique de dihydrogène sont relargués lors du 2^{ème} cycle aussi bien avec le monolithe AuMS25carb/LiBH₄ qu'avec le monolithe PdMS25carb/LiBH₄. On met ainsi en évidence l'existence d'un phénomène réversible, la capacité de rétention du dihydrogène du monolithe PdMS25carb/LiBH₄ étant légèrement supérieure à celle du monolithe AuMS25carb/LiBH₄. Après 5 cycles de désorption/réabsorption, le monolithe PdMS25carb/LiBH₄₎ permet encore de relarguer 7,4 % massique de dihydrogène, ce qui correspondant à 48 % de la capacité obtenue lors de la première désorption.

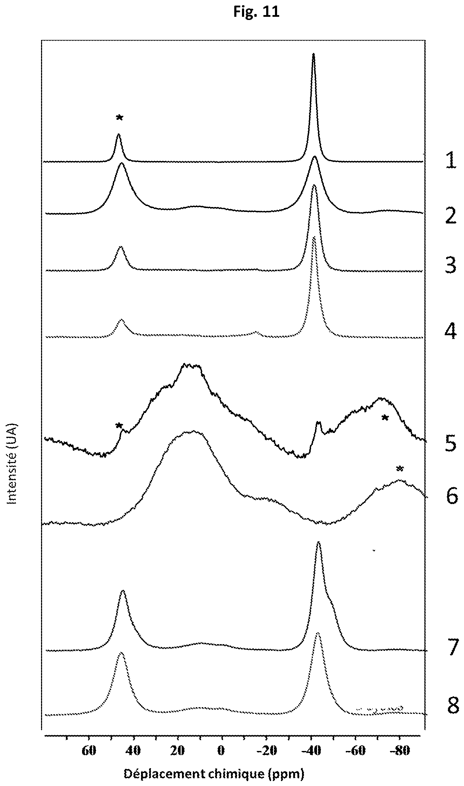

Ces résultats ont été confirmés par RMN du ¹¹B. La figure 11 annexée reporte les résultats obtenus avec les différents échantillons testés, le déplacement chimique (en ppm) étant fonction de l'intensité (en UA). Sur cette figure, les correspondances entre les échantillons testés et les numéros des courbes sont les suivantes :
- Courbe 1 : LiBH4 seul,
- Courbe 2 : monolithe MS25carb/LiBH₄ tel que préparé,
- Courbe 3 : monolithe PdMS25carb/LiBH₄ tel que préparé,
- Courbe 4 : monolithe AuMS25carb/LiBH₄ tel que préparé,
- Courbe 5 : monolithe MS25carb/LiBH₄ après 1 cycle de désorption/absorption,
- Courbe 6 : monolithe PdMS25carb/LiBH₄ après 1 cycle de désorption/absorption,
- Courbe 7 : monolithe AuMS25carb/LiBH₄ après 1 cycle de désorption/absorption,
- Courbe 8 : monolithe PdMS25carb/LiBH₄ après 5 cycles de désorption/absorption,
- Courbe 9 : monolithe AuMS25carb/LiBH₄ après 5 cycles de désorption/absorption.

Sur cette figure, on peut voir que tous les matériaux tels que préparés présentent un signal à -41 ppm, caractéristique de l'environnement BH₄ dans le LiIBH₄. Ce signal est significativement plus large dans le cas du monolithe MS25carb/LiBH₄ comparativement aux monolithes PdMS25carb/LiBH₄ et AuMS25carb/LiBH₄ et au LiBH₄ seul, indiquant une diminution du caractère cristallin plus importante lorsque le monolithe est exempt de nanoparticules métalliques, ce qui est en accord avec les résultats de diffraction des rayons X présentés sur la figure 6. Le petit signal additionnel observé au niveau des valeurs positives du déplacement chimique pour le monolithe MS25carb/LiBH₄ et précédemment attribué à la présence de liaison B-O (dues à l'interaction du LiBH4 avec des groupes fonctionnels réactifs tels que -COOH, -OH, présents à la dans la microporosité du carbone et/ou avec de l'humidité résiduelle) n'est pas observé dans les monolithes PdMS25carb/LiBH₄ et AuMS25carb/LiBH₄. Ceci confirme l'oxydation moins importante du LiBH4 dans les monolithes conformes à l'invention, c'est-à-dire comprenant des nanoparticules métalliques, comme suggérés précédemment par les courbes de désorption de l'hydrogène obtenues en spectrophotométrie de masse (figure 8). Il est par conséquent évident que la présence de ces nanoparticules métalliques améliore le processus de réhydrogénation et favorise la formation d'un environnement de type BH₄. Les nanoparticules favorisent la nucléation hétérogène et la croissance des cristaux de LiBH₄. Pendant les cycles de déshydrogénation/réhydrogénation, les nanoparticules métalliques, du fait de leur plus grande capacité à absorber la chaleur que le squelette carboné, offrent des nanospots ayant une température plus élevée que la surface carbonée sur lesquels la cinétique de réhydrogénation est certainement améliorée.

Toujours sur la figure 11, et après le premier cycle de déshydrogénation/réhydrogénation, on observe un large signal allant de -20 à 40 ppm pour le monolithe MS25carb/LiBH₄ sans nanoparticules métalliques correspondant à du bore élémentaire amorphe confirmant la très faible réhydrogénation du matériau. On remarque également des signaux additionnels à 5 et 20 ppm pouvant être attribués à la présence de BO₄ et de BO₃ significatifs de la formation de borates dont la stabilité interdit la réduction par l'hydrogène. Du fait de l'inertie chimique du bore et de la formation concomitante de borates, la quantité de LiBH₄ présente après le premier cycle de déshydrogénation/réhydrogénation est faible (seulement 2,1 % massique du dihydrogène est relargué lors de la 2^{ème} désorption, cf. figure 10). Ceci est confirmé par la très faible intensité du pic à -41 ppm sur le spectre RMN du ¹¹B. Par contre, après 5 cycles de déshydrogénation/réhydrogénation, les spectres RMN du ¹¹B des monolithes PdMS25carb/LiBH₄ et AuMS25carb/LiBH₄ conformes à l'invention donnent un signal important à -41 ppm caractéristique de la présence de BH₄, confirmant que l'hydrogène se recombine avec le bore et que le procédé de stockage de l'hydrogène dans les monolithes de l'invention est bien réversible. On observe néanmoins un très faible épaulement entre -10 et 20 ppm correspondant à une très petite quantité de bore ne réagissant pas avec l'hydrogène et qui montre que le procédé n'est pas totalement réversible. Il n'en reste pas moins que les performances de réhydrogénation des monolithes conformes à la présente invention sont très nettement supérieures à celles du monolithe MS25carb/LiBH₄ ne comportant pas d'inclusion de nanoparticules métalliques.

L'ensemble de ces résultats démontre que la présence de nanoparticules métalliques dans les monolithes de carbone permet de réduire la formation de borates, ce qui peut être expliqué par le fait que la nucléation hétérogène du LiBH4 a lieu de façon préférentielle sur les nanoparticules métalliques. Cette configuration particulière, qui diminue l'oxydation du bore pendant le processus de déshydrogénation, combinée avec la capacité intrinsèque à absorber la chaleur des nanoparticules métalliques (jouant le rôle de nanospots de température élevée), permet d'améliorer fortement le procédé de réhydrogénation, permettant ainsi d'accéder à un procédé de stockage réversible de l'hydrogène à 400°C.

## Revendications

1. Matériau composite solide alvéolaire se présentant sous la forme d'un monolithe de carbone poreux comportant un réseau poreux hiérarchisé comprenant des macropores ayant une dimension moyenne d_{A} de 1 µm à 100 µm et des micropores ayant une dimension moyenne d_{I} de 0,7 à 1,5 nm, lesdits macropores et micropores étant interconnectés, ledit matériau étant exempt de réseau mésoporeux et étant **caractérisé en ce qu'**il comporte des nanoparticules d'un métal M au degré d'oxydation zéro, ledit métal M étant choisi parmi le palladium et l'or.

2. Matériau selon la revendication 1, **caractérisé en ce que** les nanoparticules de palladium ou d'or sont présentes à la surface des macropores du monolithe.

3. Matériau selon la revendication 1 ou 2, **caractérisé en ce que** la taille des nanoparticules de métal M varie de 1 à 300 nm.

4. Procédé de préparation d'un matériau composite tel que défini à l'une quelconque des revendications 1 à 3, ledit procédé comportant les étapes suivantes :
i) une étape d'imprégnation d'un monolithe de carbone poreux comportant un réseau poreux hiérarchisé comprenant des macropores ayant une dimension moyenne d_{A} de 1 µm à 100 µm et des micropores ayant une dimension moyenne d_{I} de 0,7 à 1,5 nm, lesdits macropores et micropores étant interconnectés, ledit matériau étant exempt de réseau mésoporeux, par une solution d'un sel d'un métal M choisi parmi le palladium et l'or dans un solvant ;
ii) une étape de séchage à l'air dudit monolithe ;
iii) une étape de formation de nanoparticules dudit métal M au degré d'oxydation zéro par traitement thermique dudit monolithe à une température variant de 50 à 900°C, en présence d'un gaz réducteur, afin de provoquer la réduction des ions métalliques M jusqu'au degré d'oxydation zéro.

5. Procédé selon la revendication 4, **caractérisé en ce que** le sel d'un métal M est choisi parmi le chlorure de palladium, le tétrachloroaurate de potassium, et l'hydrogénotétrachloroaurate.

6. Procédé selon la revendication 4 ou 5, **caractérisé en ce que** la concentration en sel de métal M au sein de la solution d'imprégnation varie de 10⁻³ M à 1 M.

7. Procédé selon l'une quelconque des revendications 4 à 6, **caractérisé en ce que** le traitement thermique de l'étape iii) est réalisé en présence d'hydrogène à une température de 400 °C pendant 1 heure.

8. Procédé de stockage de l'hydrogène dans un matériau composite comportant des nanoparticules d'un métal M choisi parmi le palladium et l'or au degré d'oxydation zéro et tel que défini à l'une quelconque des revendications 1 à 3, ledit procédé étant caractérisé en qu'il comporte au moins les étapes suivantes :
a) une étape de dégazage dudit matériau sous vide secondaire et à une température de 150 à 400°C ;
b) une étape d'imprégnation, à température ambiante, dudit matériau dégazé par une solution d'au moins un hydrure métallique de formule (I) X(BH₄)ₙ avec X = Li, Na, Mg ou K, et n = 1 lorsque X = Li, Na ou K et n = 2 lorsque X = Mg, en solution dans un solvant organique choisi parmi les éthers ;
c) une étape de séchage du matériau imprégné par la solution d'hydrure métallique, ledit séchage étant réalisé sous vide primaire et à température ambiante ; et éventuellement
d) la réitération, une ou plusieurs fois, des étapes b) et c) ci-dessus.

9. Procédé selon la revendication 8, **caractérisé en ce que** le dégazage du matériau lors de l'étape a) est effectué à une température de 280 à 320°C.

10. Procédé selon la revendication 8 ou 9, **caractérisé en ce que** l'hydrure métallique de formule (I) est le borohydrure de lithium.

11. Procédé selon l'une quelconque des revendications 8 à 10, **caractérisé en ce que** le solvant de la solution d'hydrure métallique est le méthyl-*tertio*butyléther.

12. Matériau composite se présentant sous la forme d'un monolithe de carbone poreux comportant un réseau poreux hiérarchisé comprenant des macropores ayant une dimension moyenne d_{A} de 1 µm à 100 µm environ et des micropores ayant une dimension moyenne d_{I} de 0,7 à 1,5 nm, lesdits macropores et micropores étant interconnectés, ledit matériau étant exempt de réseau mésoporeux, ledit matériau composite étant **caractérisé en ce qu'**il comporte des nanoparticules d'un métal M au degré d'oxydation zéro, ledit métal M étant choisi parmi le palladium et l'or et **en ce que** les micropores renferment de l'hydrogène sous forme d'un hydrure métallique cristallin, semi-cristallin ou amorphe choisi parmi les hydrures de formule (I) X(BH₄)ₙ avec X = Li, Na, Mg ou K, et n = 1 lorsque X = Li, Na ou K et n = 2 lorsque X = Mg.

13. Matériau composite selon la revendication 12, **caractérisé en ce que** sa surface spécifique est de 50 à 900 m²/g.

14. Matériau composite selon la revendication 12 ou 13, **caractérisé en ce que** le volume des micropores est supérieur ou égal à 0,30 cm³.g⁻¹ de monolithe composite et **en ce que** l'hydrure métallique est sous forme amorphe.

15. Utilisation d'un matériau composite tel que défini à l'une quelconque des revendications 12 à 14, pour la production de dihydrogène.

16. Utilisation selon la revendication 15, pour fournir du dihydrogène dans une pile à combustible fonctionnant au dihydrogène.

17. Procédé de production de dihydrogène, **caractérisé en ce que** l'on soumet un matériau composite tel que défini à l'une quelconque des revendications 12 à 14, à une étape de chauffage à une température d'au moins 100°C.

18. Procédé selon la revendication 17, **caractérisé en ce que** l'étape de chauffage est effectuée à une température de 250 à 400°C.

19. Procédé réversible de production de dihydrogène **caractérisé en ce qu'**il comprend les étapes suivantes :
1) une étape de production de dihydrogène au cours de laquelle on soumet un matériau composite tel que défini à l'une quelconque des revendications 12 à 14 à une étape de chauffage à une température d'au moins 100°C, puis
2) une étape de réhydrogénation au cours de laquelle on soumet ledit matériau composite à une pression d'hydrogène de 50 à 200 bars à une température de 200 à 500°C pendant 1 à 48 heures ;
3) la réitération des étapes 1) et 2) ci-dessus une ou plusieurs fois.

20. Procédé selon la revendication 19, **caractérisé en ce que** l'étape 2) est réalisée en soumettant le matériau à une pression d'hydrogène de 100 bars à 400°C pendant 12 à 24 heures.

## Patentansprüche

1. Festes Waben-Verbundmaterial, darstellend die Form eines porösen Kohlenstoffmonoliths, umfassend ein hierarchisiertes poröses Netz, umfassend Makroporen mit einer mittleren Abmessung d_{A} von 1 µm bis 100 µm und Mikroporen mit einer mittleren Abmessung d_{I} von 0,7 bis 1,5 nm, wobei die Makroporen und Mikroporen miteinander verbunden sind, wobei das Material frei von einem mesoporösen Netz und **dadurch gekennzeichnet ist, dass** es Nanopartikel eines Metalls M mit Oxidationsgrad null umfasst, wobei das Metall M ausgewählt ist aus Palladium und Gold.

2. Material nach Anspruch 1, **dadurch gekennzeichnet, dass** die Nanopartikel von Palladium oder Gold auf der Oberfläche der Makroporen des Monoliths vorhanden sind.

3. Material nach Anspruch 1 oder 2, **dadurch gekennzeichnet, dass** die Größe der Nanopartikel von Metall M von 1 bis 300 nm variiert.

4. Verfahren zur Herstellung eines Verbundmaterials, wie in einem der Ansprüche 1 bis 3 definiert, wobei das Verfahren die folgenden Schritte umfasst:
i) einen Schritt des Imprägnierens eines Monoliths aus porösem Kohlenstoff, umfassend ein hierarchisiertes poröses Netz, umfassend Makroporen mit einer mittleren Abmessung d_{A} von 1 µm bis 100 µm und Mikroporen mit einer mittleren Abmessung d_{I} von 0,7 bis 1,5 nm, wobei die Makroporen und Mikroporen miteinander verbunden sind, wobei das Material frei von einem mesoporösen Netz ist, durch eine Lösung eines Salzes eines Metalls M, ausgewählt aus Palladium und Gold in einem Lösemittel;
ii) einen Schritt des Trocknens des Monoliths an der Luft;
iii) einen Schritt des Bildens von Nanopartikeln des Metalls M mit Oxidationsgrad null durch thermische Behandlung des Monoliths bei einer Temperatur, die von 50 bis 900 °C variiert, in Anwesenheit eines Reduktionsgases, um die Reduktion der Metallionen M bis zum Oxidationsgrad null hervorzurufen.

5. Verfahren nach Anspruch 4, **dadurch gekennzeichnet, dass** das Salz eines Metalls M ausgewählt ist aus Palladiumchlorid, Kaliumtetrachloroaurat und Wasserstofftetrachloroaurat.

6. Verfahren nach Anspruch 4 oder 5, **dadurch gekennzeichnet, dass** die Salzkonzentration von Metall M innerhalb der Imprägnierungslösung von 10⁻³ M bis 1 M variiert.

7. Verfahren nach einem der Ansprüche 4 bis 6, **dadurch gekennzeichnet, dass** die thermische Behandlung von Schritt iii) in Anwesenheit von Wasserstoff bei einer Temperatur von 400 °C während 1 Stunde durchgeführt wird.

8. Verfahren zur Speicherung von Wasserstoff in einem Verbundmaterial, umfassend Nanopartikel eines Metalls M, ausgewählt aus Palladium und Gold mit Oxidationsgrad null, und wie in einem der Ansprüche 1 bis 3 definiert, wobei das Verfahren **dadurch gekennzeichnet ist, dass** es mindestens die folgenden Schritte umfasst:
a) einen Schritt des Entgasens des Materials unter sekundärem Vakuum und bei einer Temperatur von 150 bis 400 °C;
b) einen Schritt des Imprägnierens, bei Umgebungstemperatur, des entgasten Materials durch eine Lösung von mindestens einem Metallhydrid mit der Formel (I) X(BH₄)ₙ, wobei X = Li, Na, Mg oder K und n = 1 wenn X = Li, Na oder K und n = 2 wenn X = Mg, in Lösung in einem organischen Lösemittel, ausgewählt aus Ethern;
c) einen Schritt des Trocknens des imprägnierten Materials durch die Metallhydridlösung, wobei das Trocknen unter primärem Vakuum und bei Umgebungstemperatur durchgeführt wird; und eventuell
d) Wiederholen der Schritte b) und c) oben ein oder mehrere Male.

9. Verfahren nach Anspruch 8, **dadurch gekennzeichnet, dass** das Entgasen des Materials in Schritt a) bei einer Temperatur von 280 bis 320 °C durchgeführt wird.

10. Verfahren nach Anspruch 8 oder 9, **dadurch gekennzeichnet, dass** das Metallhydrid der Formel (I) Lithiumborhydrid ist.

11. Verfahren nach einem der Ansprüche 8 bis 10, **dadurch gekennzeichnet, dass** das Lösemittel der Metallhydridlösung Methyl-*tertio*butylether ist.

12. Verbundmaterial, darstellend die Form eines porösen Kohlenstoffmonoliths, umfassend ein hierarchisiertes poröses Netz, umfassend Makroporen mit einer mittleren Abmessung d_{A} von 1 µm bis ungefähr 100 µm und Mikroporen mit einer mittleren Abmessung d_{I} von 0,7 bis 1,5 nm, wobei die Makroporen und Mikroporen miteinander verbunden sind, wobei das Material frei von einem mesoporösen Netz ist, wobei das Verbundmaterial **dadurch gekennzeichnet ist, dass** es Nanopartikel eines Metalls M mit Oxidationsgrad null umfasst, wobei das Metall M ausgewählt ist aus Palladium und Gold und dadurch, dass die Mikroporen Wasserstoff in Form eines kristallinen, halbkristallinen oder amorphen Metallhydrids einschließen, ausgewählt aus den Hydriden der Formel (I) X(BH₄)ₙ, wobei X = Li, Na, Mg oder K und n = 1, wenn X = Li, Na oder K und n = 2 wenn X = Mg.

13. Verbundmaterial nach Anspruch 12, **dadurch gekennzeichnet, dass** seine spezifische Oberfläche von 50 bis 900 m²/g beträgt.

14. Verbundmaterial nach Anspruch 12 oder 13, **dadurch gekennzeichnet, dass** das Volumen der Mikroporen größer als oder gleich wie 0,30 cm³.g⁻¹ Verbundmonolith ist, und dadurch, dass das Metallhydrid eine amorphe Form hat.

15. Verwendung eines Verbundmaterials wie in einem der Ansprüche 12 bis 14 definiert, zur Herstellung von Dihydrogen.

16. Verwendung nach Anspruch 15 zur Lieferung des Dihydrogens in eine Brennstoffzelle, die mit Dihydrogen funktioniert.

17. Verfahren zur Herstellung von Dihydrogen, **dadurch gekennzeichnet, dass** ein Verbundmaterial, wie in einem der Ansprüche 12 bis 14 definiert, einem Schritt des Erhitzens auf eine Temperatur von mindestens 100 °C unterzogen wird.

18. Verfahren nach Anspruch 17, **dadurch gekennzeichnet, dass** der Schritt des Heizens bei einer Temperatur von 250 bis 400 °C durchgeführt wird.

19. Umkehrbares Verfahren zur Herstellung von Dihydrogen, **dadurch gekennzeichnet, dass** es die folgenden Schritte umfasst:
1) einen Schritt des Herstellens von Dihydrogen, im Laufe dessen ein Verbundmaterial, wie in einem der Ansprüche 12 bis 14 definiert, einem Schritt des Erhitzens auf eine Temperatur von mindestens 100 °C unterzogen wird, dann,
2) einen Schritt des Wiederhydrogenisierens, im Laufe dessen das Verbundmaterial einem Wasserstoffdruck von 50 bis 200 bar bei einer Temperatur von 200 bis 500 °C während 1 bis 48 Stunden unterzogen wird;
3) Wiederholen der Schritte 1) und 2) oben ein oder mehrere Male.

20. Verfahren nach Anspruch 19, **dadurch gekennzeichnet, dass** Schritt 2) durchgeführt wird, indem das Material einem Wasserstoffdruck von 100 bar bei 400 °C während 12 bis 24 Stunden unterzogen wird.

## Claims

1. Cellular solid composite material that is in the form of a porous carbon monolith comprising a hierarchized porous network having macropores having a mean size d_{A} of 1 µm to 100 µm and micropores having a mean size d_{I} of 0.7 to 1.5 nm, said macropores and micropores being interconnected, said material having mesoporous network and wherein said cellular solid composite material has nanoparticles of a metal M in the zero oxidation state, said metal M being selected from palladium and gold.

2. Material according to claim 1, wherein the nanoparticles of palladium or gold are present at the surface of the macropores of the monolith.

3. Material according to claim 1 or 2, wherein the size of the nanoparticles of metal M varies from 1 to 300 nm.

4. Process for preparing a composite material as defined in any one of claims 1 to 3, said process further comprising the following steps:
i) a step of impregnating a porous carbon monolith comprising a hierarchized porous network comprising macropores having a mean size d_{A} of 1 µm to 100 µm and micropores having a mean size d_{I} of 0.7 to 1.5 nm, said macropores and micropores being interconnected, said material having no mesoporous network, with a solution of a salt of a metal M selected from palladium and gold in a solvent;
ii) a step of air drying said monolith;
iii) a step of forming nanoparticles of said metal M in the zero oxidation state by heat treatment of said monolith at a temperature varying from 50 to 900° C, in the presence of a reducing gas, in order to reduce the metal ions M to the zero oxidation state.

5. Process according to claim 4, wherein the salt of a metal M is selected from palladium chloride, potassium tetrachloroaurate and hydrogen tetrachloroaurate.

6. Process according to claim 4 or 5, wherein the concentration of metal M salt within the impregnation solution varies from 10⁻³ M to 1 M.

7. Process according to any one of claims 4 to 6, wherein the heat treatment of step iii) is carried out in the presence of hydrogen at a temperature of 400° C for 1 hour.

8. Process for storing hydrogen in a composite material having nanoparticles of a metal M selected from palladium and gold in the zero oxidation state and as defined in any one of claims 1 to 3, said process at comprising least the following steps:
a) a step of degassing said material under high vacuum and at a temperature of 150 to 400° C;
b) a step of impregnating, at ambient temperature, said degassed material with a solution of at least one metal hydride of formula (I) X(BH₄)ₙ with X=Li, Na, Mg or K, and n=1 when X=Li, Na or K and n=2 when X=Mg, in solution in an organic solvent selected from ethers;
c) a step of drying the material impregnated with the metal hydride solution, said drying being carried out under low vacuum and at ambient temperature; and optionally
d) the repetition, one or several times, of above steps b) and c).

9. Process according to claim 8, wherein the degassing of the material during step a) is carried out at a temperature of 280 to 320° C.

10. Process according to claim 8 or 9, wherein the metal hydride of formula (I) is lithium borohydride.

11. Process according to any one of claim 8 to 10 wherein the solvent of the metal hydride solution is methyl tert-butyl ether.

12. Composite material that is in the form of a porous carbon monolith having a hierarchized porous network comprising macropores having a mean size d_{A} of 1 µm to 100 µm approximately and micropores having a mean size d_{I} of 0.7 to 1.5 nm, said macropores and micropores being interconnected, said material having no mesoporous network, said composite material comprising nanoparticles of a metal M in the zero oxidation state, said metal M being selected from palladium and gold, and in that the micropores contain hydrogen in the form of a crystalline, semicrystalline or amorphous metal hydride selected from the hydrides of formula (I) X(BH₄)ₙ with X=Li, Na, Mg or K, and n=1 when X=Li, Na or K and n=2 when X=Mg.

13. Composite material according to claim 12, wherein said site material's specific surface area is from 50 to 900 m²/g.

14. Composite material according to claim 12 or 13, wherein the volume of the micropores is greater than or equal to 0.30 cm³g-¹ of composite monolith and in that the metal hydride is in amorphous form.

15. Use of a composite material as defined in any one of claims 12 to 14, wherein said composite material is suitable for the production of dihydrogen.

16. Use of a composite material as defined in claim 15, wherein said composite material is suitable for supplying dihydrogen to a fuel cell operating with dihydrogen.

17. Dihydrogen production process, wherein the composite material according to any one of claims 12 to 14 is subjected to a heating step at a temperature of at least 100° C.

18. Process according to claim 17, wherein the heating step is carried out at a temperature of 250 to 400° C.

19. Reversible dihydrogen production process, comprising at least the following steps:
1) a dihydrogen production step during which a composite material as defined in any one of claims 12 to 14 is subjected to a heating step at a temperature of at least 100° C, then
2) a rehydrogenation step during which said composite material is subjected to a hydrogen pressure of 50 to 200 bar at a temperature of 200 to 500° C for 1 to 48 hours; and
3) the repetition of above steps 1) and 2) one or several times.

20. Process according to claim 19, wherein step 2) is carried out by subjecting the material to a hydrogen pressure of 100 bar at 400° C for 12 to 24 hours.
